# EUROPEAN PATENT SPECIFICATION

(11) **EP 3 034 140 B1**
(45) Date of publication and mention of the grant of the patent: **19.06.2019**
(21) Application number: 15200829.8
(22) Date of filing: 17.12.2015
(51) Int. Cl.: A63F 13/30, A63F 13/352, A63F 13/71

(54) **ELECTRONIC APPARATUS, CLOUD SERVER, GAME SERVICE PROVIDING SYSTEM AND GAME SERVICE PROVIDING METHOD THEREOF**
ELEKTRONISCHE VORRICHTUNG, CLOUD-SERVER, SPIELEDIENSTBEREITSTELLUNGSSYSTEM UND SPIELEDIENSTBEREITSTELLUNGSVERFAHREN DAFÜR
APPAREIL ÉLECTRONIQUE, SERVEUR DE CLOUD, SYSTÈME DE FOURNITURE DE SERVICE DE JEU ET SON PROCÉDÉ DE FOURNITURE DE SERVICE DE JEU

(30) Priority: 19.12.2014 KR 20140184947
(43) Date of publication of application: 22.06.2016
(73) Proprietor: Samsung Electronics Co., Ltd., Gyeonggi-do 16677 (KR)
(72) Inventor: KIM, Tae Kyun, 06940 Seoul (KR); KIM, Nam Ho, 06250 Seoul (KR)
(74) Representative: HGF Limited

(56) References cited:
- US-A1- 2009 325 690
- US-A1- 2012 278 439
- US-A1- 2012 323 348

## Description

### TECHNICAL Field

The present disclosure relates to an electronic apparatus, a cloud server, a game service providing system, and a game service providing method thereof.

### Background

With development and improvement of electronic apparatuses in diversity and functionality along with electronic technology, an electronic apparatus-employed game market is gradually extending in scale. In the past, the game market has been most occupied by video games (or console games) played in connection with display units such as televisions, or computer games executed on computers. Currently, portable electronic apparatuses, such as smart phones, tablet personal computers (PCs), and so on, are widely spreading and the demand for a mobile game market is steadily increasing in proportion to improvement of the performance of a portable electronic apparatus.

Prior art document US2012/278439 discloses methods for remotely provisioning games. In a particular example an "application jukebox" handles provisioning of applications as streamable packages that consist "of data required to run a particular application on an end-user machine". When an end user requests an application, the parts of the application that are required for the first launch of the application are sent to the jukebox on the end user's target device. "The Jukebox Player will then virtualize those parts of the application onto the machine, overlaying a virtual file system and registry hive over the file system and registry hive that physically reside on the machine. This makes the machine believe, for all intents and purposes, that the application is physically installed".

This document teaches that providing the application is best done by not installing the game on a target device, but instead running the application "virtualized at near native speed in a sandbox, isolated from the target device's operating system and other unrelated processes". This avoids the delay required to download and install a full application.. However, the solution of document is inherently limiting. Since the application is never installed on the user's electronic apparatus, they must maintain a constant connection to a server in order to play it, and since the program runs in a sandbox which must be simulated, it can only ever achieve "near native speeds".

On a distribution system of mobile games, users cannot be allowed to play games unless the users download application programs for the games and the users generally determine to purchase game products based on restrictive information (e.g., reviews, grades, screen shots, and the like) which is provided from the application markets of the games. However, as the users are partly provided just with information about a number of games supplied from application markets, the distribution system of the related art is incapable of providing the users sufficient information about games which are newly developed and launched in the market.

The above information is presented as background information only to assist with an understanding of the present disclosure. No determination has been made, and no assertion is made, as to whether any of the above might be applicable as prior art with regard to the present disclosure.

### SUMMARY

Various respective aspects and features of the invention are defined in the appended claims. Combinations of features from the dependent claims may be combined with features of the independent claims as appropriate and not merely as explicitly set out in the claims.

It is an aim of certain embodiments of the invention to solve, mitigate or obviate, at least partly, at least one of the problems and/or disadvantages associated with the prior art. Certain embodiments aim to provide at least one of the advantages described below.

Accordingly, an aspect of the present disclosure is to provide an electronic apparatus, a cloud server, a game service providing system, and a game service providing method thereof capable of allowing users to directly play before purchasing and downloading games through a cloud service and capable of securing the successiveness of games, for example allowing continuity of play, in the case of downloading the games which have been played before.

Another aspect of the present disclosure is to provide an electronic apparatus, a cloud server, a game service providing system, and a game service providing method thereof capable of providing various species or types of game information, which have been impermissible in a distribution system of the related art, to users by recommending various kinds of games for the users randomly or on the users' preferences.

In accordance with an aspect of the present disclosure, a game service providing system is provided. The game service providing system includes an electronic apparatus and a cloud server. The cloud server is configured to provide a cloud game service to an electronic apparatus, transmit game playing data, which are generated according to the cloud game service, to one of the electronic apparatus or a game management server, and transmit a game download route, through which the cloud game service is provided, to the electronic apparatus. The electronic apparatus is configured to install a game received through the game download route, receive the game playing data from one of the cloud server or the game management server, and apply the game playing data to the installed game.

In accordance with another aspect of the present disclosure, a cloud server is provided. The cloud server includes a memory configured to store a cloud game, a communication module configured to communicate with an electronic apparatus and a game management server, and a control module configured to play the cloud game if the electronic apparatus requests a cloud game service, provide the cloud game service to the electronic apparatus, transmit a download route of a game to the electronic apparatus if the electronic apparatus requests the download route of the game that is provided with the cloud game service, and transmit game playing data to one of the electronic apparatus or the game management server.

In accordance with another aspect of the present disclosure, an electronic apparatus is provided. The electronic apparatus includes a communication module configured to request a download route of a game, which is provide with a cloud game service, from a cloud server, and receive the game through the download route from a download server, and a control module configured to install the received game, and apply game playing data to the installed game if the game playing data are received from one of the cloud server or a game management server.

In accordance with another aspect of the present disclosure, a game service providing method of a cloud server is provided. The method includes playing, if an electronic apparatus requests a cloud game service, a game and providing the cloud game service to the electronic apparatus, transmitting, if the electronic apparatus requests a download route of the game, the download route of the game to the electronic apparatus, and transmitting game playing data of the game to one of the electronic apparatus or a game management server.

In accordance with another aspect of the present disclosure, a game service providing method of an electronic apparatus is provided. The method includes providing a cloud game service from a cloud server, receiving a download route of a game, which is provided with the cloud game service, from the cloud server, receiving the game through the download route from a download server, installing the received game, receiving game playing data from one of the cloud server or a game management server, and applying the game playing data to the installed game.

Another aspect of the invention provides a computer program comprising instructions arranged, when executed, to implement a method in accordance with any one of the above-described aspects. A further aspect provides machine-readable storage storing such a program.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a diagram illustrating a game service providing system according to various embodiments of the present disclosure;
FIG. 2 is a flow chart illustrating a game service providing method of a game service providing system according to various embodiments of the present disclosure;
FIG. 3 is a flow chart illustrating a game service providing method of a game service providing systems according to various embodiment of the present disclosure;
FIG. 4 is a flow chart illustrating a cloud game service providing method according to various embodiments of the present disclosure;
FIG. 5 is a block diagram illustrating a configuration of an electronic apparatus according to various embodiments of the present disclosure;
FIG. 6 illustrates a display screen of an electronic apparatus according to various embodiments of the present disclosure;
FIG. 7 is a block diagram illustrating a configuration of a cloud server according to various embodiments of the present disclosure;
FIG. 8 is a block diagram illustrating a control module included in a cloud server according to various embodiments of the present disclosure;
FIG. 9 is a flow chart illustrating a game service providing method of an electronic apparatus according to various embodiments of the present disclosure; and
FIG. 10 is a flow chart illustrating a game service providing method of a cloud server according to various embodiments of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims. It includes various specific details to assist in that understanding but these are to be regarded as merely exemplary. Accordingly, those of ordinary skill in the art will recognize that various changes and modifications of the various embodiments described herein may be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

It is to be understood that the singular forms "a," "an," and "the" include plural referents unless the context clearly dictates otherwise. Thus, for example, reference to "a component surface" includes reference to one or more of such surfaces.

The terms "have", "may have", "include", "may include", "comprise", or "may comprise" used herein indicate existence of corresponding features (e.g., numerical values, functions, operations, or components) but does not exclude other features.

As used herein, the terms "A or B", "at least one of A or/and B", or "one or more of A or/and B" may include all allowable combinations which are enumerated together. For example, the terms "A or B", "at least one of A and B", or "at least one of A or B" may indicate all cases of: (1) including at least one A, (2) including at least one B, or (3) including both at least one A, and at least one B.

As used herein, the terms such as "1st", "2nd", "first", "second", and the like may be used to qualify various elements regardless of their order and/or priority, simply differentiating one from another, but do not limit those elements thereto. For example, both a first user device and a second user device indicate different user devices. For example, a first element may be referred to as a second element and vice versa without departing from the scope of the present disclosure.

As used herein, if one element (e.g., a first element) is referred to as being "operatively or communicatively connected with/to" or "connected with/to" another element (e.g., a second element), it should be understood that the former may be directly coupled with the latter, or connected with the latter via an intervening element (e.g., a third element). Otherwise, it will be understood that if one element is referred to as being "directly coupled with/to" or "directly connected with/to" with another element, it may be understood that there is no intervening element (e.g., a third element) existing between them.

In the description or claims, the term "configured to" (or "set to") may be changeable with other implicative meanings such as "suitable for", "having the capacity to", "designed to", "adapted to", "made to", or "capable of', and may not simply indicate "specifically designed to". Alternatively, in some circumstances, a term "a device configured to" may indicate that the device "may do" something together with other devices or components. For instance, a term "a processor configured to (or set to) perform A, B, and C" may indicate a generic-purpose processor (e.g., central processing unit (CPU) or application processor) capable of performing its relevant operations by executing one or more software or programs which is stored in an exclusive processor (e.g., embedded processor), which is prepared for the operations, or in a memory.

Unless otherwise defined herein, all the terms used herein, which include technical or scientific terms, may have the same meaning that is generally understood by a person skilled in the art. It will be further understood that terms, which are defined in a dictionary and commonly used, should also be interpreted as is customary in the relevantly related art and not in an idealized or overly formal detect unless expressly so defined herein in various embodiments of the present disclosure. In some cases, terms even defined in the specification may not be understood as excluding embodiments of the present disclosure.

An electronic apparatus according to various embodiments of the present disclosure may include, for example, at least one of smartphones, tablet personal computers (PC), mobile phones, video telephones, electronic book readers, desktop PCs, laptop PCs, netbook computers, workstations, servers, personal digital assistants (PDA), portable multimedia players (PMP), Moving Picture Experts Group phase 1 or phase 2 (MPEG-1 or MPEG-2) audio layer 3 (MP3) players, mobile medical devices, cameras, wearable devices (e.g., electronic glasses, or head-mounted devices (HMD), electronic apparel, electronic bracelets, electronic necklaces, electronic appcessories, electronic tattoos, smart mirrors, smart watches, and the like.

In various embodiments of the present disclosure, an electronic apparatus may be a smart home appliance. The smart home appliance, for example, may include at least one of televisions (TV), digital versatile disc (DVD) players, audios, refrigerators, air conditioners, cleaners, ovens, microwave ovens, washing machines, air cleaners, set-top boxes, home automation control panels, security control panels, TV boxes (e.g., Samsung HomeSync™, Apple TV™, Google TV™, and the like), game consoles (e.g., Xbox™, PlayStation™, and the like), electronic dictionaries, electronic keys, camcorders, electronic picture frames, and the like.

In other various embodiments of the present disclosure, an electronic apparatus may include at least one of diverse medical devices (e.g., portable medical measuring instruments (blood-sugar measuring instruments, heart-pulsation measuring instruments, blood-pressure measuring instruments, or body-temperature measuring instruments), magnetic resonance angiography (MRA) equipment, magnetic resonance imaging (MRI) equipment, computed tomography (CT) equipment, scanners, and ultrasonic devices), navigation device, global positioning system (GPS) receiver, event data recorder (EDR), flight data recorders (FDR), vehicle infotainment devices, electronic equipment for vessels (e.g., navigation systems and gyrocompasses), avionics, security devices, head units for vehicles, industrial or home robots, automatic teller's machines (ATM) for financial agencies, points of sales (POS) for stores, and internet of things (e.g., electric bulbs, diverse sensors, electric or gas meter, spring cooler units, fire alarms, thermostats, road lamps, toasters, exercise implements, hot water tanks, boilers, and the like).

According to various embodiments of the present disclosure, an electronic apparatus may include at least one of parts of furniture or buildings/structures having communication functions, electronic boards, electronic-signature receiving devices, projectors, and diverse measuring instruments (e.g., water meters, electricity meters, gas meters, and wave meters) including metal cases. In various embodiments of the present disclosure, an electronic apparatus may be one or more combinations of the above-mentioned devices. Electronic apparatuses according to various embodiments of the present disclosure may be flexible electronic apparatuses. Additionally, electronic apparatuses according to various embodiments of the present disclosure may not be restrictive to the above-mentioned devices, rather may include new electronic apparatuses emerging by way of technical development.

Hereinafter, an electronic apparatus according to various embodiments of the present disclosure will be described in conjunction with the accompanying drawings. In description for various embodiments of the present disclosure, the term "user" may refer to a person using an electronic apparatus or a device (e.g., an artificial intelligent electronic apparatus) using an electronic apparatus.

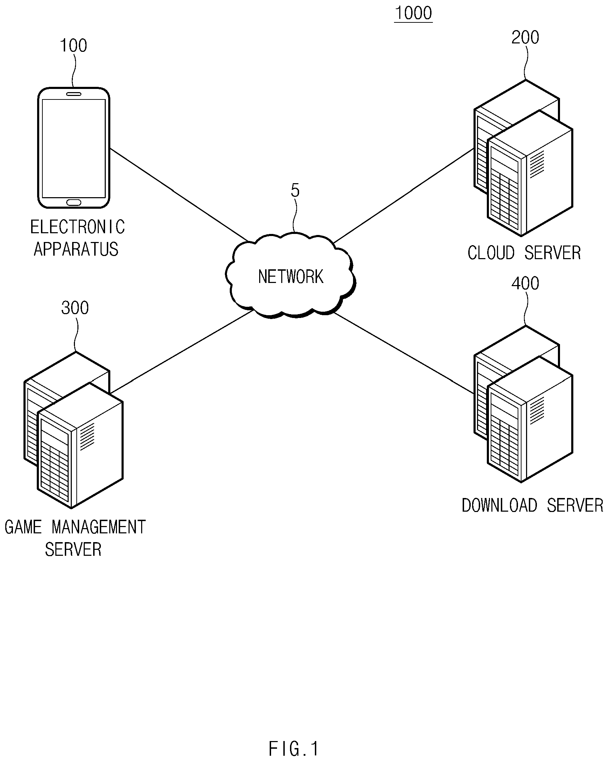

FIG. 1 is a diagram illustrating a game service providing system according to various embodiments of the present disclosure.

Referring to FIG. 1, a game service providing system 1000 may include an electronic apparatus 100, a cloud server 200, a game management server 300, and a download server 400.

The electronic apparatus 100, the cloud server 200, the game management server 300, and the download server 400 may be connected through a network 5 to communicate each other. For instance, the electronic apparatus 100, the cloud server 200, the game management server 300, and the download server 400 may be connected through the Internet or a mobile network.

The electronic apparatus 100 may be connected with the cloud server 200 by executing a cloud game application and may be provided with a cloud game service from the cloud server 200, accessing the game either by remote execution or by obtaining and downloading the game software. The electronic apparatus 100 may request a game download route, through which the cloud game service is provided, from the cloud server 200 and may receive a game (or a download game) from the download server 400 through the game download route. The electronic apparatus 100 may install and execute a received game. The electronic apparatus 100 may transmit authentication information to the cloud server 200 or the game management server 300. Authentication information may include user account information (e.g., account identification (ID) and password) and ID information (e.g., mobile station international subscriber directory number (MSISDN), international mobile equipment identity (IMEI), electronic serial number (ESN), and the like) of the electronic apparatus 100. The electronic apparatus 100 may receive game playing data, which correspond to authentication information, from the cloud server 200 or the game management server 300 and apply the game playing data to an installed game corresponding thereto. According to various embodiments of the present disclosure, game playing data may include at least one of the number of game play times, grades, a highest grade, stage completion statuses, mission completion statuses, character levels, experience levels, possessing items, game money, or a peers list.

The cloud server 200 may provide a cloud game service. A cloud game service means a service providing a game execution screen through execution of a game by the cloud server 200 to allow a user to play the game even though the game has not been installed in the electronic apparatus 100, i.e. the game may execute remotely on the cloud server at the request of the user. For example, the cloud server 200 may receive game manipulating instructions from the electronic apparatus 100 to execute the game with the game manipulating instructions, and may transmit real-time game playing images to the electronic apparatus 100 in streaming mode. According to an embodiment of the present disclosure, the cloud server 200 may perform user authentication using received authentication information, and may provide the cloud game service to the electronic apparatus 100 after the user authentication is approved.

The cloud server 200 may store game playing data changed or modified according to the playing of game. Game playing data may include additional items, game money, and so on, which may be provided only to a cloud game service user. According to an embodiment of the present disclosure, the cloud server 200 may map game playing data with authentication information, which is received from the electronic apparatus 100, and may store the mapped data. The cloud server 200 may transmit game playing data to the electronic apparatus 100 or the game management server 300.

The game management server 300 may store various kinds of data necessary for operating games executed in the electronic apparatus 100 or the cloud server 200. The game management server 300 may receive and store game playing data from the cloud server 200. According to an embodiment of the present disclosure, the game management server 300 may include a plurality of servers independently operated by kinds of games or game developers. The game management server 300 may transmit game playing data to the electronic apparatus 100. According to an embodiment of the present disclosure, the game management server 300 may transmit game playing data corresponding to authentication information which is received from the electronic apparatus 100.

According to an embodiment of the present disclosure, the game management server 300 may provide additional benefits, such as items, game money, and so on, to a user playing a game through a cloud game service. The game management server 300, for example, may classify the electronic apparatus 100 and the cloud server 200 using internet protocol (IP) addresses in the case of communicating with the electronic apparatus 100 and the cloud server 200 through the Internet. The download server 400 may store games (or download games) which may be installed and executed in the electronic apparatus 100. According to an embodiment of the present disclosure, the download server 400 may be an application market (e.g., App Store™, Google Play Store™, and the like). If a game download request is received from the electronic apparatus 100, the download server 400 may transmit a requested game to the electronic apparatus 100. According to an embodiment of the present disclosure, the download server 400 may perform user authentication if a game download request is received from the electronic apparatus 100, and may transmit a requested game to the electronic apparatus 100 after the user authentication is approved.

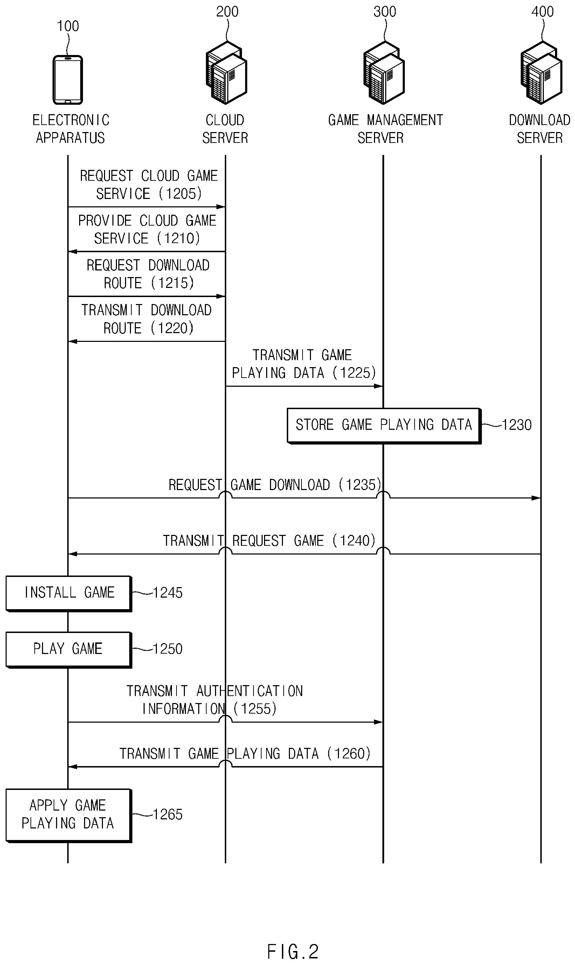

FIG. 2 is a flow chart illustrating a game service providing method of a game service providing system according to various embodiments of the present disclosure.

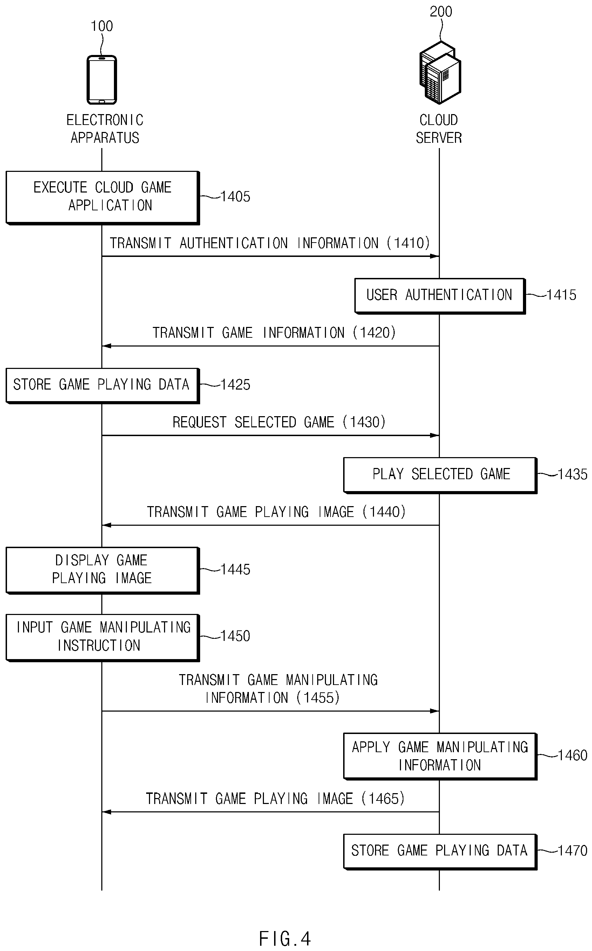

Referring to FIG. 2, at operation 1205, an electronic apparatus 100 may request a cloud game service from a cloud server 200. The cloud server 200 may provide the cloud game service to the electronic apparatus 100 at operation 1210. According to an embodiment of the present disclosure, the cloud server 200 may perform user authentication while providing the cloud game service. For example, the cloud server 200 may receive authentication information from the electronic apparatus 100 and may provide a cloud game service according to a result of the authentication information. A more detailed sequence for requesting and providing a cloud game service will be described later with reference to FIG. 4.

At operation 1215, the electronic apparatus 100 may request a game download route, through which the cloud game service is provided, from the cloud server 200. At operation 1220, the cloud server 200 may transmit the requested game download route to the electronic apparatus 100. The game download route may be, for example, a uniform resource locator (URL) address indicating a storage location of a game. At operation 1225, the cloud server 200 may transmit game playing data to a game management server 300. According to an embodiment of the present disclosure, the cloud server 200 may transmit game playing data to the game management server 300 after storing the game playing data. The cloud server 200 may differently set a transmission timing of the game playing data to the game management server 300. For example, the cloud server 200 may transmit game playing data at the time of newly generating or updating game playing data, or in a specific period. According to an embodiment of the present disclosure, the cloud server may transmit authentication information together while transmitting game playing data. For example, game playing data may be mapped with authentication information and may be stored in the cloud server 200. Then, the cloud server 200 may transmit the game playing data, which are mapped with the authentication information, to the game management server 300.

At operation 1230, the game management server 300 may store the game playing data received from the cloud server 200. The game management server 300 may use authentication information to identify a user and may divisionally manage the game playing data for users e.g. by allowing game data for different users to be stored and accessed user-by-user.

At operation 1235, the electronic apparatus 100 may request a download of the game from a download server 400 through the game download route. At operation 1240, the download server 400 may transmit the requested game to the electronic apparatus 100.

At operation 1245, the electronic apparatus 100 may install the request game. At operation 1250, the electronic apparatus 100 may execute the game installed therein. For example, the electronic apparatus 100 may execute a game, which is installed therein, according to a game execution instruction of a user. The electronic apparatus 100 may be connected with the game management server 300 if the game begins to be executed and at operation 1255, may transmit authentication information to the game management server 300.

If the authentication information is received from the electronic apparatus 100, the game management server 300 may transmit game playing data corresponding to the authentication information at operation 1260. For example, the game management server 300 may identify a user from authentication information, and may transmit game playing data, which are involved in a game played by the identified user, to the electronic apparatus 100.

At operation 1265, the electronic apparatus 100 may apply the game playing data to the installed game. If the game playing data are applied to the installed game, the user may be able to successively play the game under reflection of a result of the game which has been played in the cloud game service e.g. re-starting the game at a point in the game where the player previously stopped playing, preserving scores, settings etc. For example, in the case of that a specific stage of a game is completed in the cloud game service, s user may be able to immediately play the next stage of the game which is installed in the electronic apparatus 100. For another example, in the case that a user obtains an item or game money from the cloud game service, the user may be able to intactly use the item or game money in a game which is installed in the electronic apparatus 100. For still another example, in the case of adding a third person as a peer in the cloud game service, it may be allowable for a user to maintain peerage with the third person even though a game installed in the electronic apparatus 100 is executed by the user.

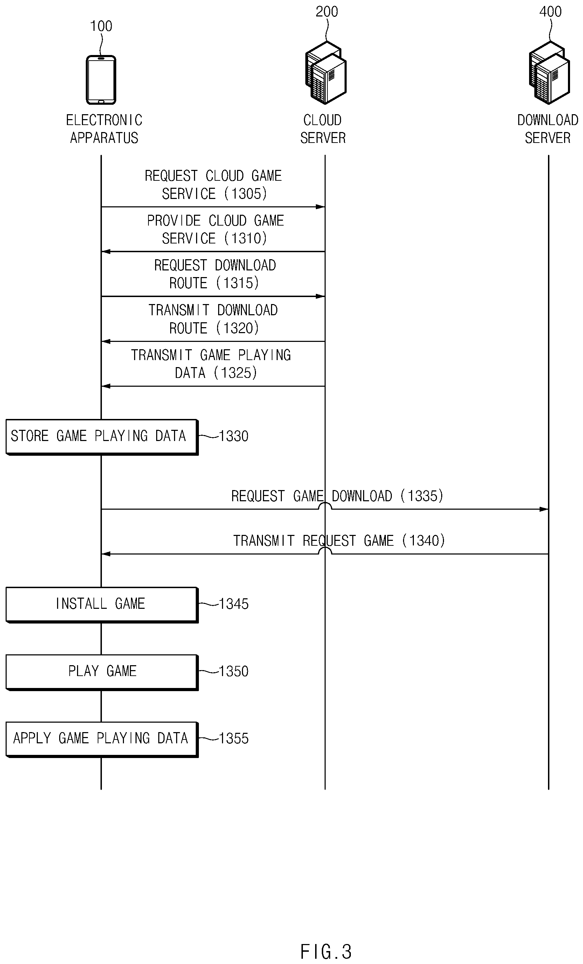

FIG. 3 is a flow chart illustrating a game service providing method of a game service providing systems according to various embodiment of the present disclosure.

Referring to FIG. 3, an electronic apparatus 100 may request a cloud game service from a cloud server 200 at operation 1305. At operation 1310, the cloud server 200 may provide the cloud game service to the electronic apparatus 100. According to an embodiment of the present disclosure, the cloud server 200 may perform user authentication while providing the cloud game service. For example, the cloud server 200 may receive authentication information from the electronic apparatus 100 and may provide a cloud game service according to a result of user authentication. A more detailed sequence for requesting and providing a cloud game service will be described later with reference to FIG. 4.

At operation 1315, the electronic apparatus 100 may request a game download route, through which the cloud game service is provided, from the download server 200. At operation 1320, the cloud server 200 may transmit the requested game download route to the electronic apparatus 100. The game download route may be, for example, an URL address indicating a storage location of a game. At operation 1325, the cloud server 200 may transmit game playing data to the electronic apparatus 100. According to an embodiment of the present disclosure, the cloud server 200 may transmit game playing data to the electronic apparatus 100 after storing the game playing data. According to various embodiments of the present disclosure, game playing data may include at least one of the number of game play times, grades/scores, a highest grade/score, stage completion statuses, mission completion statuses, character levels, experience levels, possessing items, game money, or a peers list.

At operation 1330, the electronic apparatus 100 may store the game playing data which is received from the cloud server 200. At operation 1335, the electronic apparatus 100 may request a download of the game from a download server 400 through the game download route. At operation 1340, the download server 400 may transmit the requested game to the electronic apparatus 100.

At operation 1345, the electronic apparatus 100 may install the request game. At operation 1350, the electronic apparatus 100 may execute the game installed therein. At operation 1355, if the game is installed or begins to be executed, the electronic apparatus 100 may apply the game playing data to the installed game. If the game playing data is applied to the installed game, the user may be able to successively play the game under reflection of a result of the game which has been played in the cloud game service e.g. as part of an initial trial/evaluation of the game by the user.

FIG. 4 is a flow chart illustrating a cloud game service providing method according to various embodiments of the present disclosure.

Operations included in the flow chart of FIG. 4 may correspond to detailed embodiments about the operation 1205 or 1305 for requesting a cloud game service by the electronic apparatus 100, and the operation 1210 or 1310 for providing the cloud game service by the cloud server 200, all of which are described with reference to FIG. 2 or 3.

Referring to FIG. 4, at operation 1405, an electronic apparatus 100 may execute a game application. If the game application is executed, the electronic apparatus 100 may be connected with a cloud server 200 and at operation 1410, may transmit authentication information to the cloud server 200. Authentication information may include user account information (e.g., account ID and password) or identification information (MSISDN, IMEI, ESN, and the like) of the electronic apparatus 100.

At operation 1415, the cloud server 200 may perform user authentication. For example, the cloud server 200 may compare authentication information, which is received from the electronic apparatus, with a user authentication database which is previously stored, and may perform user authentication. The cloud server 200 may provide a cloud game service based on a result of the user authentication. For example, the cloud server 200 may provide a cloud game service onto to an electronic apparatus 100 which is approved in user authentication.

After the user authentication, the cloud server 200 may transmit game information to the electronic apparatus 100 at operation 1420. For example, the cloud server 200 may transmit game information, such as categories, ranks, grades, price, and so on, to the electronic apparatus 100. According to an embodiment of the present disclosure, a user may be able to search serviceable games and the cloud server 200 may transmit information about the games which are found by the user. According to an embodiment of the present disclosure, the cloud server 200 may partly recommend serviceable games and may transmit information about the recommended games to the electronic apparatus 100. According to an embodiment of the present disclosure, the cloud server 200 may randomly recommend serviceable games. According to an embodiment of the present disclosure, the cloud server 200 may decide preferences for game categories based on at least one of the number of service providing times and game play results of a user, and may recommend games, which belong to specific categories, according to the preferences. For example, the cloud server 200 may recommend games which belong to two higher categories preferred by a user. For another example, the cloud server 200 may recommend games which belong to a category which has been most rarely played by a user. For still another example, the cloud server 200 may recommend games which belong to a category with the highest game grade. For still another example, the cloud server 200 may recommend games which belong to a category, which has the highest game grade, among three higher categories preferred by a user. The electronic apparatus 100 may display the received game information on a display unit to inform the user of the received game information, and may select a specific game or request other game information in response to a user's instruction.

At operation 1425, the electronic apparatus 100 may receive a user's instruction for selecting a game. At operation 1430, the electronic apparatus 100 may request a selected game from the cloud server 200.

If a request for the selected game is received from the electronic apparatus 100, the cloud server 200 may execute the selected game at operation 1435. At operation 1440, the cloud server 200 may transmit game playing images to the electronic apparatus 100. According to an embodiment of the present disclosure, the cloud server 200 may transmit game playing images, which varies in real time, to the electronic apparatus 100 in streaming mode.

If a game playing image is received, the electronic apparatus 100 may display the game playing image on the display unit at operation 1445. At operation 1450, the electronic apparatus 100 may receive game manipulating instructions from the user. For example, game manipulating instructions may be touch coordinates values or key input values. At operation 1455, the electronic apparatus 100 may transmit game control information to the cloud server 200.

At operation 1460, the cloud server 200 may apply the game control information to a game which is being played. At operation 1465, the cloud server 200 may transmit a game playing image, which is changed by game control information, to the electronic apparatus 100.

If the game playing image changed by the game control information is received, the electronic apparatus 100 may display the changed game playing image on the display unit and the operations 1445 to 1465 may be repeated.

At operation 1470, the cloud server 200 may store game playing data which is generated or changed dependent on game playing conditions. According to an embodiment of the present disclosure, the cloud server 200 may differently set time points of storing game playing data. For example, the cloud server 200 may store game playing data in a specific period, when new game playing data is generated, or when previous game playing data is updated. According to an embodiment of the present disclosure, the cloud server 200 may store game playing data by mapping the game playing data with authentication information which is received from the electronic apparatus 100.

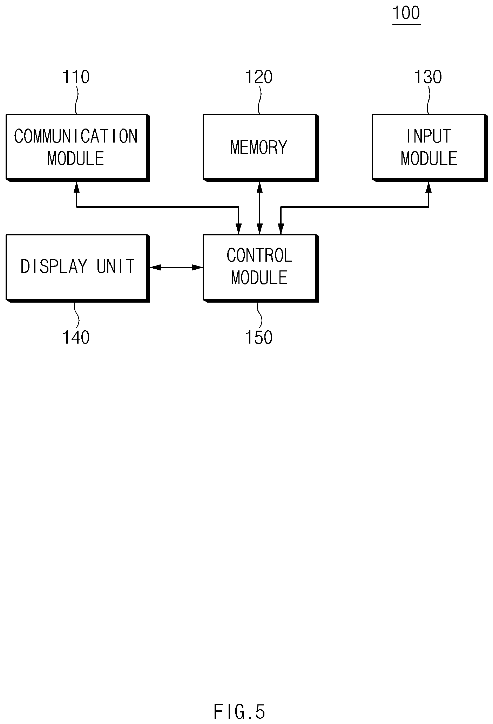

FIG. 5 is a block diagram illustrating a configuration of an electronic apparatus according to various embodiments of the present disclosure.

Referring to FIG. 5, an electronic apparatus 100 may include a communication module 110, a memory 120, an input module 130, a display unit 140, and a control module 150.

The communication module 110 may communicate with the cloud server 200, the game management server 300, or the download server 400 (see FIG. 1). The communication module 110 may transmit and receive information, which is necessary to provide a cloud game service, to and from the cloud server 200 according to control of the control module 150 and may provide the cloud game service to a user. For example, the communication module 110 may transmit authentication information to the cloud server 200 and may receive cloud game information or game playing images, which are running in the cloud server 200, from the cloud server 200.

The communication module 110 may request a game download route, through which a cloud game service is provided, from the cloud server 200 and may receive the game download route from the cloud server 200. The communication module 110 may request a download of a game from the download server 400 through the game download route and then may receive the game, which is requested, from the download server 400. According to an embodiment of the present disclosure, the communication module 110 may transmit authentication information to the cloud server 200 and the game management server 300. Authentication information may include user account information (e.g., account ID and password) or identification information (e.g., MSISD, IMEI, ESN, and the like) of the electronic apparatus 100. The communication module 110 may receive game playing data, which correspond to authentication information, from the cloud server 200 or the game management server 300.

The memory 120 may store a game which is received from the download server 400. The memory may store game playing data which is received from the cloud server 200 or the game management server 300.

The input module 130 may receive game manipulating instructions by manipulation of a user. For example, the input module 130 may receive a game selecting instruction for selecting a cloud game. For another example, the input module 130 may receive game manipulating instructions for playing a game. According to various embodiments of the present disclosure, the input module 130 may include at least one of a touch screen operated by a user's touch input, a keyboard, a mouse, and a motion sensor which recognizes a user's gesture.

The display unit 140 may display game information which is received from the cloud server 200. For example, the display unit 140 may display information, such as categories, ranks, reviews, grades, prices, and so on which are received from the cloud server 200, according to user interface (UI) which is provided by a cloud game application.

The display unit 140 may display game playing images or diverse applications executed by the control module 150. Additionally, the display unit 140 may display a game playing image of a cloud game which is received from the cloud server 200.

The control module 150 may control a general operation of the electronic apparatus 100. The control module 150 may independently control the communication module 110, the memory 120, the input module 130, or the display unit 140 to provide a game service to a user in accordance with various embodiments of the present disclosure.

The control module 150 may install a game which is stored in the memory 120 and may execute the installed game. According to an embodiment of the present disclosure, the control module 150 may apply game playing data, which is received from the cloud server 200 or the game management server 300, to the installed game.

According to an embodiment of the present disclosure, the control module 150 may perform one of game download, game replay, game recommendation, purchase list addition, or specific application page display (main page display or game recommendation page display) in accordance with a user's manipulating direction after a game provided from a cloud game service is terminated.

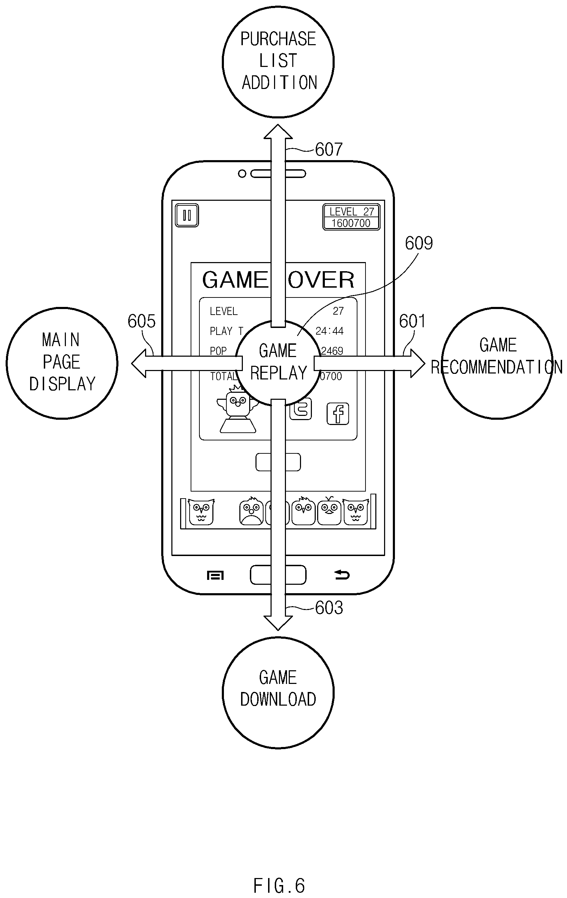

FIG. 6 illustrates a display screen of an electronic apparatus according to various embodiments of the present disclosure.

Referring to FIG. 6, a control module 150 (see Figure 5) may control performing diverse operations according to a user's manipulating direction in a game-over screen. If there is a rightward swipe 601 input from a user, the control module 150, for example, may display information about other recommended games of a cloud server 200. If there is a downward swipe 603 input from a user, the control module, for example, may request a download route of a played game and may be connected with a download server 400 to provide a game download screen or to receive a game. If there is a leftward swipe 605 input from a user, the control module 150, for example, may control to display a specific page (e.g., main page) of an application out of the game-over screen. If there is an upward swipe 607 input from a user, the control module 150, for example, may add a played game to a purchase list. If there is an input of directionless touch 609 manipulation (e.g., tapping manipulation) from a user, the control module 150, for example, may allow the same game to be replayed.

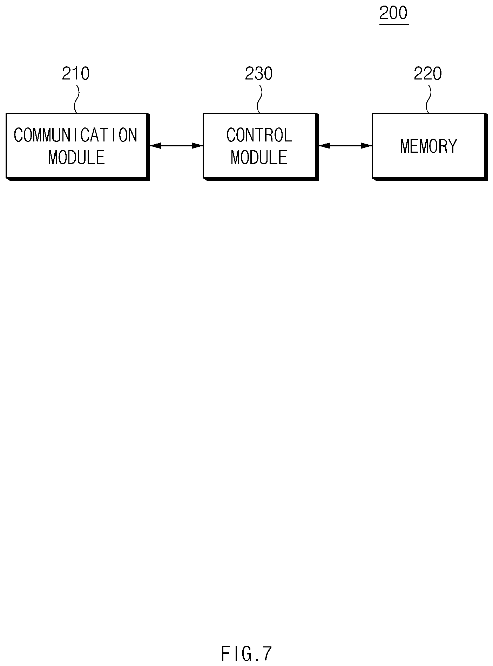

FIG. 7 is a block diagram illustrating a configuration of a cloud server according to various embodiments of the present disclosure.

Referring to FIG. 7, a cloud server 200 may include a communication module 210, a memory 220, and a control module 230.

The communication module 210 may communicate with the electronic apparatus 100 or the game management server 300 (see FIG. 1). The communication module 210 may transmit and receive information, which is necessary to provide a cloud game service, to and from the electronic apparatus 100 according to control of the control module 230 and may provide the cloud game service to a user. For example, the communication module 210 may receive authentication information from the electronic apparatus 100 and may transmit cloud game information or playing images of a game, which is being played by the control module 230, to the electronic apparatus 100.

The communication module 210 may transmit game playing data to the electronic apparatus 100 or the game management server 300. Game playing data may include additional items, game money, and so on which are provided only to a cloud game service user. According to an embodiment of the present disclosure, the communication module 210 may transmit game playing data which are mapped with authentication information received from the electronic apparatus 100.

The memory 220 may store the cloud game. The cloud game stored in the memory 220 may be played by the control module 230.

The memory 220 may store game playing data of users, who use the cloud game service, in a form of database. According to an embodiment of the present disclosure, the memory 220 may store game playing data which are generated or modified by game play respective to users. According to an embodiment of the present disclosure, the cloud server 200 may differently set time points of storing game playing data. For example, the cloud server 200 may store game playing data in a specific period, when new game playing data is generated, or when previous game playing data is updated. According to an embodiment of the present disclosure, the memory 220 may store game playing data which are mapped with authentication information received from the electronic apparatus 100. According to an embodiment of the present disclosure, the memory 220 may store a user authentication database.

The control module 230 may control a general operation of the cloud server 200. The control module 230 may control the communication module 210 or the memory 220 and may provide a game service to a user in accordance with various embodiments of the present disclosure.

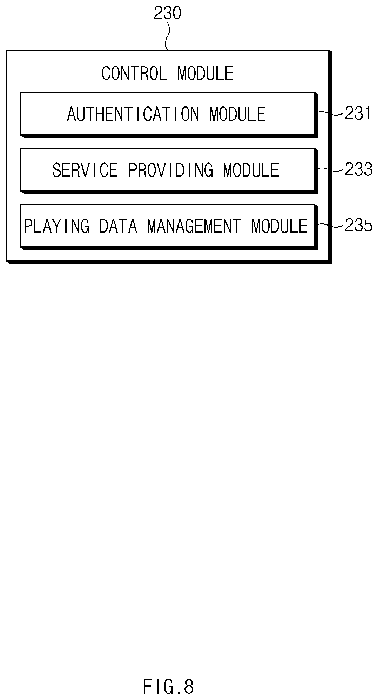

FIG. 8 is a block diagram illustrating a control module included in a cloud server according to various embodiments of the present disclosure.

Referring to FIG. 8, a control module 230 may include an authentication module 231, a service providing module 223, and a playing data management module 235.

The authentication module 231 may perform authentication for a user who uses a cloud game service. For example, in the case that the cloud game service is restrictively provided to a specific user (e.g., a paid user or a user possessing a specific terminal), it may be even necessary to perform user authentication. The authentication module 231 may perform user authentication by comparing authentication information, which is received from an electronic apparatus 100, with a user authentication database stored in the memory 220. The authentication module 231 may restrictively allow only a user, who is approved in user authentication, to be provided with the cloud game service.

The service providing module 233 may provide the cloud game service. According to an embodiment of the present disclosure, the service providing module 233 may transmit game information to the electronic apparatus 100. For example, the service providing module 233 may transmit game information, such as categories, ranks, reviews, grades, prices, and so on, to the electronic apparatus 100. According to an embodiment of the present disclosure, the user may be able to search serviceable games and the service providing module 233 may transmit information about games which are searched by the user. According to an embodiment of the present disclosure, the service providing module 233 may partly recommend serviceable games and may transmit information of the recommended games to the electronic apparatus 100. According to an embodiment of the present disclosure, the service providing module 233 may randomly recommend serviceable games. According to an embodiment of the present disclosure, the service providing module 233 may decide preferences by game categories based on at least one of the number of service providing times or game play results, and may recommend games, which are included in a specific category, according to the preferences. For example, the service providing module 233 may recommend games which belong to two higher categories preferred by a user. For another example, the service providing module 233 may recommend games which belong to a category which has been rarely played by a user. For still another example, the service providing module 233 may recommend games which belong to a category with a highest game grade. For still another example, the service providing module 233 may recommend games which belong to a category, which has the highest game grade, among three higher categories preferred by the user.

If a game request is received from the electronic apparatus 100, the service providing module 233 may play the requested game and may control to transmit a game playing image to the electronic apparatus 100. If game manipulating information is received from the electronic apparatus 100, the service providing module 233 may apply the game manipulating information to a game which is being played. The service providing module 233 may transmit a game playing image, which is changed by game manipulating information, to the electronic apparatus 100. According to an embodiment of the present disclosure, the service providing module 233 may control to transmit game playing images, which are changed in real time, to the electronic apparatus 100 in streaming mode.

The playing data management module 235 may manage game playing data which is generated or modified by game play. According to an embodiment of the present disclosure, the playing data management module 235 may control to transmit game playing data to the electronic apparatus 100 or the game management server 300 in a specific period, when new game playing data is generated, or when previous game playing data is updated. According to an embodiment of the present disclosure, the playing data management module 235 may store game playing data which are mapped with authentication information received from the electronic apparatus 100.

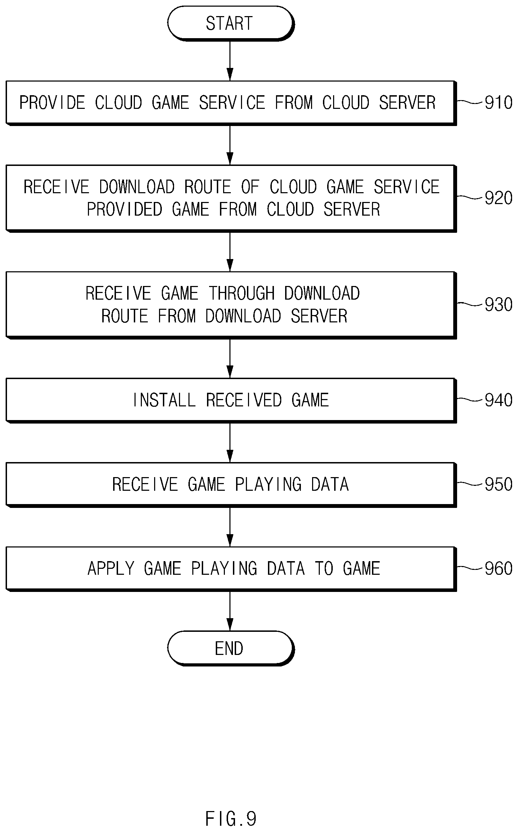

FIG. 9 is a flow chart illustrating a game service providing method of an electronic apparatus according to various embodiments of the present disclosure. The flow chart shown in FIG. 9 may be composed of operations processed in an electronic apparatus 100 illustrated in FIGS. 1 to 5. Thus, although not description below, the technical features relevant to an electronic apparatus 100 may be also applied to the flow chart of FIG. 9 by referring to FIGS. 1 to 5.

Referring to FIG. 9, at operation 910, the electronic apparatus 100 may be provided with a cloud game service from a cloud server 200. For example, the electronic apparatus 100 may transmit authentication information to the cloud server 200 and may receive cloud game information or game playing images of a game, which is being played in the cloud server 200, from the cloud server 200. According to an embodiment of the present disclosure, the electronic apparatus 100 may receive user's manipulation if the game provided from a cloud game service is terminated. And the electronic apparatus 100 may perform one of a game download, a game replay, a game recommendation, a purchase list addition, or a specific application page display (main page display or game recommendation page display) in accordance with a user's manipulating direction.

At operation 920, the electronic apparatus 100 may receive a download route of the game, which is provided with the cloud game service, to the cloud server 200. For example, the electronic apparatus 100 may request a download route of a played game from the cloud server 200 in accordance with a user's manipulation direction which is input after the game provided from the cloud game service is terminated, and then may receive the download route of the played game.

At operation 930, the electronic apparatus 100 may receive the game from a download server 400 through the download route.

If the game is received from the download server 400, the electronic apparatus 100 may install the received game therein at operation 940.

At operation 950, the electronic apparatus 100 may receive game playing data which are generated by providing the cloud game service from the cloud server 200 or the game management server 300. According to an embodiment of the present disclosure, the electronic apparatus 100 may transmit authentication information to the cloud server 200 or the game management server 300, and may receive the game playing data, which corresponds to the authentication information, from the cloud server 200 or the game management server 300.

At operation 960, the electronic apparatus 100 may apply the game playing data to the installed game.

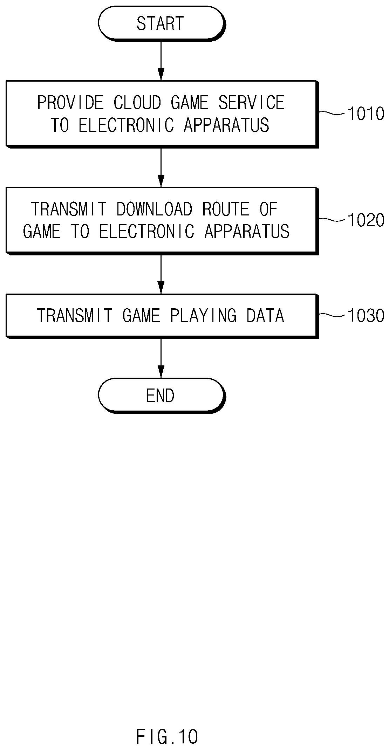

FIG. 10 is a flow chart illustrating a game service providing method of a cloud server according to various embodiments of the present disclosure. The flow chart shown in FIG. 10 may be composed of operations processed in a cloud server 200 illustrated in FIGS. 1 to 4, 7, and 8. Thus, although not description below, the technical features relevant to the cloud server 200 may be also applied to the flow chart of FIG. 10 by referring to FIGS. 1 to 4, 7 and 8.

Referring to FIG. 10, at operation 1010, if the electronic apparatus 100 requests a cloud game service, the cloud server 200 may play a game to provide the cloud game service for the electronic apparatus 100. For example, the cloud server 200 may transmit cloud game information or game playing images of a game, which is played by a control module 230 (see Figure 7), to the electronic apparatus 100. According to an embodiment of the present disclosure, if authentication information is received from the electronic apparatus 100, the cloud server 200 may perform user authentication using the authentication information and may provide the cloud game service according to a result of the user authentication. According to an embodiment of the present disclosure, if the electronic apparatus 100 requests the cloud game service, the cloud server 200 may decide preferences for game categories based on at least one of the number of service providing times and game play results of a user, and may recommend games, which belong to specific categories, according to the preferences.

At operation 1020, the cloud server 200 may transmit a download route of a played game to the electronic apparatus 100.

At operation 1030, the cloud server 200 may transmit game playing data to the electronic apparatus 100 or the game management server 300. According to an embodiment of the present disclosure, the cloud server 200 may map the game playing data with authentication information and may transmit the mapped game playing data to the game management server 300.

The term "module" used for the present disclosure, for example, may mean a unit including one of hardware, software, and firmware or a combination of two or more thereof. A "module", for example, may be interchangeably used with terminologies such as a unit, logic, a logical block, a component, a circuit, etc. The "module" may be a minimum unit of a component integrally configured or a part thereof. The "module" may be a minimum unit performing one or more functions or a portion thereof. The "module" may be implemented mechanically or electronically. For example, the "module" according to various embodiments of the present disclosure may include at least one of an application-specific integrated circuit (ASIC) chip performing certain operations, a field-programmable gate arrays (FPGAs), or a programmable-logic device, those of which have been known or to be developed in the future.

At least a part of an apparatus (e.g., modules or functions thereof) or a method (e.g., operations) according to various embodiments of the present disclosure, for example, may be implemented by instructions stored in a computer-readable storage medium in the form of a programmable module. The instruction, when executed by a processor (e.g., the control module 130 or 230) may perform a function corresponding to the instruction. Such a computer-readable medium may be, for example, the memory 130.

The computer-readable recording medium may include a hard disk, a magnetic media such as a floppy disk and a magnetic tape, an optical media such as compact disc read only memory (CD-ROM) and a DVD, a magneto-optical media such as a floptical disk, and the following hardware devices specifically configured to store and perform a program instruction (e.g., a programming module): ROM, random access memory (RAM), and a flash memory. Also, a program instruction may include not only a mechanical code such as things generated by a compiler but also a high-level language code executable on a computer using an interpreter. The above hardware unit may be configured to operate via one or more software modules for performing an operation of the present disclosure, and vice versa.

A module or a programming module according to various embodiments of the present disclosure may include at least one of the above elements, or a part of the above elements may be omitted, or additional other elements may be further included. Operations performed by a module, a programming module, or other elements according to an embodiment of the present disclosure may be executed sequentially, in parallel, repeatedly, or in a heuristic method. Also, a portion of operations may be executed in different sequences, omitted, or other operations may be added thereto.

It will be appreciated that embodiments of the present invention can be realized in the form of hardware, software or a combination of hardware and software. Any such software may be stored in the form of volatile or nonvolatile storage, for example a storage device like a ROM, whether erasable or rewritable or not, or in the form of memory, for example RAM, memory chips, device or integrated circuits or on an optically or magnetically readable medium, for example a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. The software could be stored in one location or could be distributed across different processors, possibly in different geographic locations. The software may run on a virtual machine.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

Throughout the description and claims of this specification, the words "comprise" and "contain" and variations of the words, for example "comprising" and "comprises", means "including but not limited to", and is not intended to (and does not) exclude other components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

## Claims

1. A game service providing system (1000) comprising:
an electronic apparatus (100); and
a cloud server (200) configured to:
provide a cloud game service to the electronic apparatus,
transmit game playing data, which are generated according to the cloud game service, to the electronic apparatus or a game management server (300), and
transmit a game download route, through which the cloud game service is provided, to the electronic apparatus,
wherein the electronic apparatus is configured to:
install a game received through the game download route,
the electronic apparatus being further characterized to receive the game playing data from the cloud server or the game management server, and
apply the game playing data to the installed game.

2. The game service providing system (1000) of claim 1, wherein the cloud server (200) is further configured to provide the cloud game service to the electronic apparatus (100) if user authentication is completed using authentication information received from the electronic apparatus.

3. The game service providing system (1000) of claim 2, wherein the cloud server (200) is further configured to:
map the game playing data with the authentication data, and
transmit the game playing data to the game management server.

4. The game service providing system (1000) of any one of claims 1 to 3, wherein the electronic apparatus (100) is further configured to:
transmit authentication information to the game management server (300), and
receive the game playing data, which corresponds to the authentication information, from the game management server.

5. A cloud server (200) comprising:
a memory (220) configured to store a cloud game;
a communication module (210) configured to communicate with an electronic apparatus (100) and a game management server (300); and
a control module (230) configured to:
play the cloud game if the electronic apparatus requests a cloud game service,
provide the cloud game service to the electronic apparatus,
transmit a download route of a game to the electronic apparatus if the electronic apparatus requests the download route of the game that is provided with the cloud game service, and
further characterized to transmit game playing data to the electronic apparatus or the game management server.

6. The cloud server (200) of claim 5, wherein, if authentication information is received from the electronic apparatus, the control module is further configured to:
perform user authentication using the authentication information, and
provide the cloud game service based on a result of the user authentication.

7. The cloud server (200) of claim 6, wherein the control module is further configured to:
map the game playing data with the authentication information, and
transmit the mapped game playing data to the game management server.

8. The cloud server (200) of any one of claims 5 to 7, wherein the game playing data comprise at least one of a number of game play times, grades, a highest grade, stage completion statuses, mission completion statuses, character levels, experience levels, possession items, game money, or a peers list.

9. The cloud server (200) of claims 5 to 7, wherein the control module (230) is further configured to:
decide preferences for game categories based on at least one of a number of service times and game play results of a user if the electronic apparatus (100) requests the cloud game service, and
recommend games, which are included in a specific category, according to the preferences.

10. An electronic apparatus (100) comprising:
a communication module (110) configured to:
request a download route of a game, which is provide with a cloud game service, from a cloud server (200), and
receive the game through the download route from a download server (400); and
a control module (150) configured to:
install the received game,
the control module being further characterized to apply game playing data to the installed game if the game playing data is received from the cloud server or a game management server (300).

11. The electronic apparatus (100) of claim 10, wherein the communication module (110) is further configured to:
transmit authentication information to the cloud server (200) or the game management server (300), and
receive game playing data, which corresponds to the authentication information, from the cloud server or the game management server.

12. The electronic apparatus (100) of claim 10 or 11, further comprising:
an input module (130) configured to receive a user's manipulation,
wherein the control module (150) is further configured to perform one of a game download, a game replay, a game recommendation, a purchase list addition, or a specific application page display according to a direction of the user's manipulation after the received game provided from the cloud game service is terminated.

13. A game service providing method of a cloud server (200), the method comprising:
playing, if an electronic apparatus (100) requests a cloud game service, a game and providing the cloud game service to the electronic apparatus;
transmitting, if the electronic apparatus requests a download route of the game, the download route of the game to the electronic apparatus;
further **characterized by** transmitting game playing data of the game to the electronic apparatus or a game management server (300).

14. The game service providing method of claim 13, wherein the providing of the cloud game service comprises:
performing, if authentication information is received from the electronic apparatus (100), user authentication using the authentication information; and
providing the cloud game service according to a result of the user authentication.

15. A game service providing method of an electronic apparatus (100), the method comprising:
providing a cloud game service from a cloud server;
receiving a download route of a game, which is provided with the cloud game service, from the cloud server (200);
receiving the game through the download route from a download server (400);
installing the received game;
further characterized bay receiving game playing data from the cloud server or a game management server (300); and
applying the game playing data to the installed game.

## Patentansprüche

1. Spieledienstbereitstellungssystem (1000), umfassend:
eine elektronische Vorrichtung (100); und
einen Cloud-Server (200), der für Folgendes konfiguriert ist:
Bereitstellen eines Cloud-Spieledienstes an die elektronische Vorrichtung, Übertragen von Daten zum Spielen eines Spiels, die gemäß dem Cloud-Spieledienst erstellt werden, an die elektronische Vorrichtung oder einen Spielverwaltungsserver (300), und
Übertragen einer Spiele-Download-Strecke, über die der Cloud-Spieledienst bereitgestellt wird, an die elektronische Vorrichtung,
wobei die elektronische Vorrichtung für Folgendes konfiguriert ist:
Installieren eines Spiels, das über die Spiele-Download-Strecke empfangen wird,
wobei die elektronische Vorrichtung ferner durch Folgendes gekennzeichnet ist:
Empfangen der Daten zum Spielen eines Spiels von dem Cloud-Server oder dem Spielverwaltungsserver, und
Anwenden der Daten zum Spielen eines Spiels auf das installierte Spiel.

2. Spieledienstbereitstellungssystem (1000) nach Anspruch 1, wobei der Cloud-Server (200) ferner konfiguriert ist, um den Cloud-Spieledienst der elektronischen Vorrichtung (100) bereitzustellen, wenn Benutzerauthentifizierung unter Verwendung von Authentifizierungsinformationen, die von der elektronischen Vorrichtung empfangen werden, abgeschlossen ist.

3. Spieledienstbereitstellungssystem (1000) nach Anspruch 2, wobei der Cloud-Server (200) ferner für Folgendes konfiguriert ist:
Darstellen der Daten zum Spielen eines Spiels mit den Authentifizierungsdaten, und
Übertragen der Daten zum Spielen eines Spiels an den Spielverwaltungsserver.

4. Spieledienstbereitstellungssystem (1000) nach einem der Ansprüche 1 bis 3, wobei die elektronische Vorrichtung (100) ferner für Folgendes konfiguriert ist:
Übertragen von Authentifizierungsinformationen an den Spielverwaltungsserver (300), und
Empfangen der Daten zum Spielen eines Spiels, die den Authentifizierungsinformationen entsprechen, von dem Spielverwaltungsserver.

5. Cloud-Server (200), umfassend:
einen Speicher (220), der konfiguriert ist, um ein Cloud-Spiel zu speichern;
ein Kommunikationsmodul (210), das konfiguriert ist, um mit einer elektronischen Vorrichtung (100) und einem Spielverwaltungsserver (300) zu kommunizieren; und
ein Steuermodul (230), das für Folgendes konfiguriert ist:
Spielen des Cloud-Spiels, wenn die elektronische Vorrichtung einen Cloud-Spieledienst anfordert,
Bereitstellen des Cloud-Spieledienstes an die elektronische Vorrichtung,
Übertragen einer Download-Strecke eines Spiels an die elektronische Vorrichtung, wenn die elektronische Vorrichtung die Download-Strecke des Spiels anfordert, die mit dem Cloud-Spieledienst bereitgestellt wird, und
ferner gekennzeichnet zum
Übertragen von Daten zum Spielen eines Spiels an die elektronische Vorrichtung oder den Spielverwaltungsserver.

6. Cloud-Server (200) nach Anspruch 5, wobei, wenn Authentifizierungsinformationen von der elektronischen Vorrichtung empfangen werden, das Steuermodul ferner für Folgendes konfiguriert ist:
Durchführen von Benutzerauthentifizierung unter Verwendung der Authentifizierungsinformationen, und
Bereitstellen des Cloud-Spieledienstes auf Grundlage eines Ergebnisses der Benutzerauthentifizierung.

7. Cloud-Server (200) nach Anspruch 6, wobei das Steuermodul ferner für Folgendes konfiguriert ist:
Darstellen der Daten zum Spielen eines Spiels mit den Authentifizierungsinformationen, und
Übertragen der dargestellten Daten zum Spielen eines Spiels an den Spielverwaltungsserver.

8. Cloud-Server (200) nach einem der Ansprüche 5 bis 7, wobei die Daten zum Spielen eines Spiels zumindest eines von einer Anzahl an Zeiten zum Spielen eines Spiels, Noten, einer höchsten Note, Stufenabschlussstatus, Missionsabschlussstatus, Charakter-Level, Erlebnis-Level, Besitzgegenständen, Spielgeld oder einer Freundeliste umfassen.

9. Cloud-Server (200) nach Anspruch 5 bis 7, wobei das Steuermodul (230) ferner für Folgendes konfiguriert ist:
Bestimmen von Präferenzen für Spielekategorien auf Grundlage von zumindest einem von einer Anzahl an Dienstzeiten und Spielergebnissen eines Benutzers, wenn die elektronische Vorrichtung (100) den Cloud-Spieledienst anfordert, und
Empfehlen von Spielen, die in einer spezifischen Kategorie enthalten sind, gemäß den Präferenzen.

10. Elektronische Vorrichtung (100), umfassend:
ein Kommunikationsmodul (110), das für Folgendes konfiguriert ist:
Anfordern einer Download-Strecke eines Spiels, die mit dem Cloud-Spieledienst bereitgestellt wird, von einem Cloud-Server (200), und
Empfangen des Spiels über die Download-Strecke von einem Download-Server (400); und
ein Steuermodul (150), das für Folgendes konfiguriert ist:
Installieren des empfangenen Spiels, wobei das Steuermodul ferner durch Folgendes gekennzeichnet ist:
Anwenden von Daten zum Spielen eines Spiels auf das installierte Spiel, wenn die Daten zum Spielen eines Spiels von dem Cloud-Server oder einem Spielverwaltungsserver (300) empfangen werden.

11. Elektronische Vorrichtung (100) nach Anspruch 10, wobei das Kommunikationsmodul (110) ferner für Folgendes konfiguriert ist:
Übertragen von Authentifizierungsinformationen an den Cloud-Server (200) oder den Spielverwaltungsserver (300), und
Empfangen von Daten zum Spielen eines Spiels, die den Authentifizierungsinformationen entsprechen, von dem Cloud-Server oder dem Spielverwaltungsserver.

12. Elektronische Vorrichtung (100) nach Anspruch 10 oder 11, ferner umfassend:
ein Eingabemodul (130), das konfiguriert ist, um die Änderung eines Benutzers zu empfangen,
wobei das Steuermodul (150) ferner konfiguriert ist, um eines von einem Spiele-Download, einer Spielewiederholung, einer Spieleempfehlung, einer Einkaufslistenhinzufügung oder einer spezifischen Anwendungsseitenanzeige gemäß einer Anweisung der Änderung des Benutzers durchzuführen, nachdem das empfangene, von dem Cloud-Spieledienst bereitgestellte Spiel beendet ist.

13. Spieledienstbereitstellungsverfahren eines Cloud-Servers (200), wobei das Verfahren Folgendes umfasst:
Spielen, wenn eine elektronische Vorrichtung (100) einen Cloud-Spieledienst anfordert, eines Spiels und Bereitstellen des Cloud-Spieledienstes an die elektronische Vorrichtung;
Übertragen, wenn die elektronische Vorrichtung eine Download-Strecke des Spiels anfordert, der Download-Strecke des Spiels an die elektronische Vorrichtung;
ferner **gekennzeichnet durch**
Übertragen von Daten zum Spielen eines Spiels des Spiels an die elektronische Vorrichtung oder einen Spielverwaltungsserver (300).

14. Spieledienstbereitstellungsverfahren nach Anspruch 13, wobei das Bereitstellen des Cloud-Spieledienstes Folgendes umfasst:
Durchführen von Benutzerauthentifizierung, wenn Authentifizierungsinformationen von der elektronischen Vorrichtung (100) empfangen werden, unter Verwendung der Authentifizierungsinformationen; und
Bereitstellen des Cloud-Spieledienstes gemäß einem Ergebnis der Benutzerauthentifizierung.

15. Spieledienstbereitstellungsverfahren einer elektronischen Vorrichtung (100), wobei das Verfahren Folgendes umfasst:
Bereitstellen eines Cloud-Spieledienstes von einem Cloud-Server;
Empfangen einer Download-Strecke eines Spiels, die mit dem Cloud-Spieledienst bereitgestellt wird, von dem Cloud-Server (200);
Empfangen des Spiels über die Download-Strecke von einem Download-Server (400);
Installieren des empfangenen Spiels;
ferner **gekennzeichnet durch**
Empfangen von Daten zum Spielen eines Spiels von dem Cloud-Server oder einem Spielverwaltungsserver (300); und
Anwenden der Daten zum Spielen eines Spiels auf das installierte Spiel.

## Revendications

1. Système de délivrance de service de jeu (1000) comprenant :
un appareil électronique (100) ; et
un serveur Cloud (200) configuré pour :
délivrer un service de jeu basé dans le Cloud à l'appareil électronique, transmettre des données de lecture de jeu, qui sont générées en fonction du service de jeu basé dans le Cloud, à l'appareil électronique ou à un serveur de gestion de jeu (300), et
transmettre un chemin de téléchargement de jeu, via lequel le service de jeu basé dans le Cloud est délivré, à l'appareil électronique, dans lequel l'appareil électronique est configuré pour :
installer un jeu reçu via le chemin de téléchargement de jeu,
l'appareil électronique étant en outre caractérisé pour
recevoir les données de lecture de jeu depuis le serveur Cloud ou le serveur de gestion de jeu, et
appliquer les données de lecture de jeu au jeu installé.

2. Système de délivrance de service de jeu (1000) selon la revendication 1, dans lequel le serveur Cloud (200) est en outre configuré pour délivrer le service de jeu basé dans le Cloud à l'appareil électronique (100) si une authentification d'utilisateur est effectuée en utilisant des informations d'authentification reçues depuis l'appareil électronique.

3. Système de délivrance de service de jeu (1000) selon la revendication 2, dans lequel le serveur Cloud (200) est en outre configuré pour :
cartographier les données de lecture de jeu avec les données d'authentification, et transmettre les données de lecture de jeu au serveur de gestion de jeu.

4. Système de délivrance de service de jeu (1000) selon l'une quelconque des revendications 1 à 3, dans lequel l'appareil électronique (100) est en outre configuré pour :
transmettre des informations d'authentification au serveur de gestion de jeu (300), et recevoir les données de lecture de jeu qui correspondent aux informations d'authentification, depuis le serveur de gestion de jeu.

5. Serveur Cloud (200), comprenant :
une mémoire (220) configurée pour stocker un jeu basé dans le Cloud ;
un module de communication (210) configuré pour communiquer avec un appareil électronique (100) et un serveur de gestion de jeu (300) ; et un module de commande (230) configuré pour :
lire le jeu basé dans le Cloud si l'appareil électronique demande un service de jeu basé dans le Cloud,
délivrer le service de jeu basé dans le Cloud à l'appareil électronique,
transmettre un chemin de téléchargement d'un jeu à l'appareil électronique si l'appareil électronique demande le chemin de téléchargement du jeu qui est délivré avec le service de jeu basé dans le Cloud, et
caractérisé en outre pour
transmettre des données de lecture de jeu à l'appareil électronique ou au serveur de gestion de jeu.

6. Serveur Cloud (200) selon la revendication 5, dans lequel, si des informations d'authentification sont reçues depuis l'appareil électronique, le module de commande est en outre configuré pour :
exécuter une authentification d'utilisateur en utilisant les informations d'authentification, et délivrer le service de jeu basé dans le Cloud sur la base d'un résultat de l'authentification d'utilisateur.

7. Serveur Clould (200) selon la revendication 6, dans lequel le module de commande est en outre configuré pour :
cartographier les données de lecture de jeu avec les informations d'authentification, et transmettre les données de lecture de jeu cartographiées au serveur de gestion de jeu.

8. Serveur Cloud (200) selon l'une quelconque des revendications 5 à 7, dans lequel les données de lecture de jeu comprennent au moins l'un d'un nombre de temps de lecture de jeu, catégories, une catégorie la plus élevée, statuts d'achèvement de niveau, statuts d'achèvement de mission, niveaux de personnage, niveaux d'expérience, objets en possession, argent de jeu, ou liste de partenaires.

9. Serveur Clould (200) selon les revendications 5 à 7, dans lequel le module de commande (230) est en outre configuré pour :
décider de préférences pour des catégories de jeu sur la base d'au moins l'un d'un nombre de temps de service et résultats de lecture de jeu d'un utilisateur si l'appareil électronique (100) demande le service de jeu basé dans le Cloud, et
recommander des jeux, qui sont inclus dans une catégorie spécifique, en fonction des préférences.

10. Appareil électronique (100) comprenant : un module de communication (110) configuré pour :
demander un chemin de téléchargement d'un jeu, qui est délivré avec un service de jeu basé dans le Cloud, depuis un serveur Cloud (200), et
recevoir le jeu via le chemin de téléchargement depuis un serveur de téléchargement (400) ; et
un module de commande (150) configuré pour :
installer le jeu reçu, le module de commande étant en outre caractérisé pour
appliquer des données de lecture de jeu au jeu installé si les données de lecture de jeu sont reçues depuis le serveur Cloud ou un serveur de gestion de jeu (300).

11. Appareil électronique (100) selon la revendication 10, dans lequel le module de communication (110) est en outre configuré pour :
transmettre des informations d'authentification au serveur Cloud (200) ou au serveur de gestion de jeu (300), et
recevoir des données de lecture de jeu, qui correspondent aux informations d'authentification, depuis le serveur Cloud ou le serveur de gestion de jeu.

12. Appareil électronique (100) selon la revendication 10 ou 11, comprenant en outre :
un module d'entrée (130) configuré pour recevoir une manipulation d'un utilisateur,
dans lequel le module de commande (150) est en outre configuré pour exécuter l'un d'un téléchargement de jeu, une relecture de jeu, une recommandation de jeu, un ajout de liste d'achat, ou un affichage de page d'application spécifique en fonction d'une direction de manipulation de l'utilisateur une fois que le jeu reçu délivré depuis le service de jeu basé dans le Cloud est terminé.

13. Procédé de délivrance d'un service de jeu d'un serveur Cloud (200), le procédé comprenant :
la lecture, si un appareil électronique (100) demande un service de jeu basé dans le Cloud, d'un jeu et la délivrance du service de jeu basé dans le Cloud à l'appareil électronique ;
la transmission, si l'appareil électronique demande un chemin de téléchargement du jeu, du chemin de téléchargement du jeu à l'appareil électronique ;
**caractérisé en outre par**
la transmission des données de lecture de jeu, du jeu, à l'appareil électronique ou à un serveur de gestion de jeu (300).

14. Procédé de délivrance d'un service de jeu selon la revendication 13, dans lequel la délivrance du service de jeu basé dans le Cloud comprend :
l'exécution, si des informations d'authentification sont reçues depuis l'appareil électronique (100), d'une authentification d'utilisateur en utilisant les informations d'authentification ; et
la délivrance du service de jeu basé dans le Cloud en fonction d'un résultat de l'authentification d'utilisateur.

15. Procédé de délivrance d'un service de jeu d'un appareil électronique (100), le procédé comprenant :
la délivrance d'un service de jeu basé dans le Cloud depuis un serveur Cloud ;
la réception d'un chemin de téléchargement d'un jeu, qui est délivré avec le service de jeu basé dans le Cloud, depuis un serveur Cloud (200) ;
la réception du jeu via le chemin de téléchargement depuis un serveur de téléchargement (400) ;
l'installation du j eu reçu ;
**caractérisé en outre par** la réception de données de lecture de jeu depuis le serveur Cloud ou un serveur de gestion de jeu (300) ; et
l'application des données de lecture de jeu au jeu installé.
